# EUROPEAN PATENT APPLICATION

(11) **EP 4 807 855 A1**
(43) Date of publication of application: **16.09.2026**
(21) Application number: 23957890.9
(22) Date of filing: 06.11.2023
(51) Int. Cl.: H01M 10/613, H01M 10/627, H01M 10/6556, H01M 10/6561

(54) **ENERGY STORAGE SYSTEM**

(71) Applicant: Contemporary Amperex Technology Co., Limited, Ningde, Fujian 352100 (CN)
(72) Inventor: LIU, Yue, Ningde, Fujian 352100 (CN); PENG, Haoran, Ningde, Fujian 352100 (CN); SU, Haibin, Ningde, Fujian 352100 (CN)
(74) Representative: Ran, Handong
(86) International application number: PCT/CN2023/129965
(87) International publication number: WO 2025/097276

(57) **Abstract**

The present application belongs to the technical field of batteries. Disclosed is an energy storage system. The energy storage system comprises an energy storage box, a battery cluster and an exhaust assembly. The energy storage box comprises a battery compartment and an auxiliary compartment; and a partition wall is provided between the battery compartment and the auxiliary compartment, and the partition wall is provided with a ventilation opening, which is in communication with the battery compartment. The battery cluster is mounted in the battery compartment, and the battery cluster comprises a plurality of battery modules, which are electrically connected to one another. The exhaust assembly is provided with an air duct, and the exhaust assembly is arranged in the auxiliary compartment, and is configured to discharge a gas, which is discharged from the ventilation opening, out of the energy storage box through the air duct. By means of the ventilation opening and the exhaust assembly of the energy storage system in the embodiment of the present application, the gas in the battery compartment is discharged out of the energy storage box.

## Description

### TECHNICAL FIELD

This application relates to the field of battery technology, and in particular, to an energy storage system.

### BACKGROUND

New energy batteries are increasingly widely used in daily life and industry. For example, new energy vehicles equipped with batteries have been widely used, and batteries are also increasingly applied in fields such as energy storage.

In the related art, thermal runaway may occur in battery clusters in a battery compartment during operation, generating a large amount of thermal runaway gases. These thermal runaway gases need to be discharged from an energy storage box of an energy storage system as much as possible.

### SUMMARY

In order to solve the above technical problem, this application provides an energy storage system to discharge a thermal runaway gas in a battery compartment from an energy storage box during thermal runaway.

This application is implemented through the following technical solutions.

A first aspect of embodiments of this application provides an energy storage system, including:
an energy storage box, including a battery compartment and an auxiliary compartment, where a partition wall is provided between the battery compartment and the auxiliary compartment, and the partition wall is formed with a ventilation opening communicating with the battery compartment;
a battery cluster, mounted in the battery compartment, where the battery cluster includes a plurality of battery modules electrically connected to each other; and
the exhaust assembly has an air duct, the exhaust assembly is provided at the auxiliary compartment, and the exhaust assembly is configured to discharge a gas discharged from the ventilation opening out of the energy storage box through the air duct.

In the embodiments of this application, the gas from the battery compartment is discharged from the energy storage box through the ventilation opening and the air duct by the exhaust assembly provided at the auxiliary compartment, reducing accumulation of the thermal runaway gas in the battery compartment.

In an embodiment, the exhaust assembly includes:
a switching assembly, where the air duct is formed at the switching assembly, the switching assembly covers the ventilation opening, the switching assembly is sealingly connected to the partition wall, the switching assembly is configured to open or close the ventilation opening, and when the switching assembly opens the ventilation opening, the battery compartment communicates with an exterior of the energy storage box through the ventilation opening; and
an exhaust fan, configured to discharge the gas discharged from the ventilation opening out of the energy storage box through the air duct, where the exhaust fan is mounted at the switching assembly.

In the embodiments of this application, through the switching assembly and the exhaust fan, the battery compartment can be sealed when the battery cluster is in a normal operating state, and the thermal runaway gas in the battery compartment can be discharged as quickly as possible during thermal runaway.

In an embodiment, the switching assembly includes:
a first mounting ring, surrounding an outer side of the ventilation opening, where the first mounting ring is sealingly connected to the partition wall; and
a switching apparatus, detachably connected to the first mounting ring, where the switching apparatus is sealingly connected to the first mounting ring; the air duct is formed at the switching apparatus; and the switching apparatus is configured to open or close the ventilation opening.

In the embodiments of this application, the switching apparatus is configured to open or close the ventilation opening, and disassembly and replacement for maintenance is required for the switching apparatus. The first mounting ring is sealingly connected to the partition wall, limiting gas escape between the first mounting ring and the partition wall, and providing the battery compartment with good sealing performance when the switching apparatus closes the ventilation opening. The first mounting ring provides a basis for sealed mounting of the switching apparatus, and a surface for sealed mounting of the switching apparatus can be provided on the first mounting ring as actually required, providing strong flexibility for sealed mounting of the switching apparatus. The first mounting ring is detachably connected to the switching apparatus, so that when the switching apparatus needs to be replaced for maintenance, the to-be-replaced switching apparatus may be removed from the first mounting ring, and a new switching apparatus can be mounted on the first mounting ring. The switching apparatus is detachably connected to the first mounting ring, and the first mounting ring and the partition wall may not be disassembled, which can reduce damage to the partition wall caused by structure disassembly.

In an embodiment, the switching apparatus includes:
an exhaust valve, where at least one exhaust valve is provided; the at least one exhaust valve is sealingly connected to the first mounting ring to limit gas escape between the first mounting ring and the corresponding exhaust valve; and the exhaust valve is configured to open or close the ventilation opening; and
an air pipe assembly, where the air pipe assembly and the exhaust fan both are located on a side of the exhaust valve that is sealingly connected to the first mounting ring and that faces away from the battery compartment, the air duct spans the exhaust valve and the air pipe assembly, the exhaust fan is mounted in the air pipe assembly, and an end of the air pipe assembly facing the first mounting ring is sealingly connected to the first mounting ring and/or the corresponding exhaust valve.

In the embodiments of this application, the first mounting ring is sealingly connected to the partition wall, and the exhaust valve is sealingly connected to the first mounting ring. When the exhaust valve closes the ventilation opening, the gas in the battery compartment cannot escape from a space between the first mounting ring and the partition wall, from a space between the exhaust valve and the first mounting ring, or from the ventilation opening, providing the battery compartment with good sealing performance. The air pipe assembly and the fan are both located on the side of the exhaust valve sealingly connected to the first mounting ring facing away from the battery compartment, and the exhaust valve sealingly connected to the first mounting ring is relatively close to the ventilation opening. When the exhaust valve sealingly connected to the first mounting ring closes the ventilation opening, the gas in the battery compartment is blocked as much as possible on a side of the exhaust valve corresponding to the first mounting ring facing the battery compartment. In a case where the battery cluster operates normally, heat exchange between a gas in the battery compartment and an environment outside the battery compartment can be reduced, thereby reducing the impact of the external environment on the environment in the battery compartment. The exhaust fan is mounted in the air pipe assembly, and an end of the air pipe assembly facing the first mounting ring is sealingly connected to the first mounting ring and/or the corresponding exhaust valve, so that airflow flowing from the exhaust valve to the air pipe assembly can be discharged quickly through the fan as much as possible.

In an embodiment, the exhaust valve includes:
a valve body, where the first mounting ring is sealingly connected to the valve body of the corresponding exhaust valve, the air duct spans the valve body and the air pipe assembly, and the valve body has a valve port communicating with the air duct;
a valve plate, where the valve plate is movably mounted at the valve body to open or close the valve port, the valve plate is in a position closing the valve port to enable the exhaust valve to close the ventilation opening, the valve plate is in a position opening the valve port to enable the exhaust valve to open the ventilation opening, and when the valve plate closes the valve port, the valve plate and the valve body are sealed against each other; and
a normally closed apparatus, mounted at the valve body, where the normally closed apparatus is configured to keep the valve plate in the position closing the valve port under a normal condition.

In the embodiments of this application, the normally closed apparatus keeps the valve in a normally closed state, and the valve plate controls opening or closing of the ventilation opening.

In an embodiment, the exhaust valve further includes a breathable mesh plate connected to the valve body, the breathable mesh plate has a mesh portion allowing air to pass, and the mesh portion is located on a side of the valve plate facing the ventilation opening.

In the embodiments of this application, airflow is filtered by the breathable mesh plate, reducing the impact of foreign matter in the airflow on the exhaust valve and the exhaust fan.

In an embodiment, the partition wall and the valve plate are both provided with a thermal insulation layer.

In the embodiments of this application, heat exchange between gas in the battery compartment and the outside is reduced by the thermal insulation layer of the valve plate, reducing the impact of the external environment on the environment in the battery compartment.

In an embodiment, the air pipe assembly includes:
an exhaust air pipe, located in the auxiliary compartment, where an end of the exhaust air pipe facing the first mounting ring is sealingly connected to the first mounting ring and/or the corresponding exhaust valve to limit gas escape from the end of the exhaust air pipe facing the first mounting ring; and
a second mounting ring, located at an end of the exhaust air pipe facing away from the first mounting ring, where the second mounting ring is connected to a compartment wall of the auxiliary compartment, the second mounting ring and the exhaust air pipe are sealingly connected to each other, the air duct spans the second mounting ring, the exhaust air pipe, and the exhaust valve, and the second mounting ring surrounds the exhaust fan.

In the embodiments of this application, an end of the exhaust air pipe in the auxiliary compartment facing the first mounting ring is sealingly connected to the first mounting ring and/or the exhaust valve, so that the gas basically does not escape from a space between the exhaust air pipe and the first mounting ring, and the gas in the auxiliary compartment does not enter the exhaust air pipe from the space between the first mounting ring and the exhaust air pipe, so that gas flowing from the ventilation opening and the exhaust valve into the exhaust air duct can be discharged out of the energy storage box as quickly as possible through the exhaust air pipe and the exhaust fan under the action of the exhaust fan at the second mounting ring. An end of the exhaust air pipe in the auxiliary compartment facing the first mounting ring is sealingly connected to the first mounting ring and/or the exhaust valve. The second mounting ring is connected to the compartment wall of the auxiliary compartment. The second mounting ring and the exhaust air pipe are sealed against each other. Since these connection positions are all sealed, during the process in which airflow is discharged outward from the exhaust valve through the exhaust air pipe and the exhaust fan at the second mounting position, the thermal runaway gas basically does not diffuse into the auxiliary compartment, but is discharged to the outside of the energy storage box under the action of the fan. The second mounting ring is connected to the compartment wall of the auxiliary compartment, and the second mounting ring surrounds the exhaust fan, which helps the second mounting ring to better support the mounting of the exhaust fan. The second mounting ring connected to the compartment wall of the auxiliary compartment is sealingly mounted with the exhaust air pipe, so that the second mounting ring can better support the end of the exhaust air pipe facing away from the first mounting ring, alleviating suspension of the end of the air pipe assembly facing away from the first mounting ring.

In an embodiment, the energy storage box includes a box body and a compartment door mounted on the box body, the box body and the compartment door enclose the auxiliary compartment, the second mounting ring is connected to the compartment door, the air pipe assembly further includes a buffer pad located between the exhaust air pipe and the second mounting ring, the air duct spans the second mounting ring, the exhaust air pipe, the buffer pad, and the exhaust valve, one of the second mounting ring and the exhaust air pipe is connected to the buffer pad, the other of the second mounting ring and the exhaust air pipe is able to abut against or separate from the buffer pad, and when the compartment door is closed, the buffer pad implements sealing between the second mounting ring and the exhaust air pipe.

In the embodiments of this application, the second mounting ring is connected to the compartment door, and the second mounting ring is supported by the compartment door. Since one of the second mounting ring and the exhaust air pipe is connected to the buffer pad, and the other of the second mounting ring and the exhaust air pipe can abut against or separate from the buffer pad, the second mounting ring can be separated from the exhaust air pipe, the compartment door can open the auxiliary compartment, and when the compartment door closes the auxiliary compartment, the buffer pad is squeezed by the second mounting ring and the exhaust air pipe. This can better achieve sealing between the second mounting ring and the exhaust air pipe.

In an embodiment, at least two exhaust valves are provided, at least one of the exhaust valves is located on a side of the exhaust fan facing away from the exhaust air pipe, and the second mounting ring is sealingly connected to the corresponding exhaust valve to limit gas escape between the second mounting ring and the exhaust valve.

In the embodiments of this application, the exhaust fan is located between two exhaust valves. The exhaust valves on two sides of the exhaust fan are closed. In this way, heat exchange of airflow on a side of the exhaust valve corresponding to the first mounting ring facing the ventilation opening is reduced; and debris outside the energy storage box can be blocked by the exhaust valve located on the side of the exhaust fan facing away from the exhaust air pipe, reducing the possibility of foreign matter entering the fan and causing damage to the fan.

In an embodiment, the compartment wall of the auxiliary compartment includes a mounting wall opposite the partition wall, an end of the switching assembly facing away from the ventilation opening is mounted on the mounting wall, and a gas in the battery compartment is discharged through the ventilation opening, the air duct, and the mounting wall.

In the embodiments of this application, since the mounting wall is opposite the partition wall, gas in the battery compartment is discharged from the mounting wall through the ventilation opening of the partition wall, so that a flow distance for discharging the gas in the battery compartment from the energy storage box is short, which helps to quickly discharge the gas in the battery compartment from the energy storage box.

In an embodiment, the energy storage system further includes a cooling unit, the cooling unit is configured to cool the battery cluster, the cooling unit is located on a side of the auxiliary compartment along a width direction of the energy storage box, and the switching assembly is located on another side of the auxiliary compartment along the width direction of the energy storage box.

In the embodiments of this application, the space utilization in the energy storage box is improved through the arrangement of the switching assembly and the cooling unit.

In an embodiment, the energy storage system further includes a fire control pipe, the fire control pipe is configured to supply firefighting water to the battery compartment, the fire control pipe is located on a side of the auxiliary compartment along the width direction of the energy storage box facing away from the cooling unit.

In the embodiments of this application, the space utilization in the energy storage box is improved through the arrangement of the fire control pipe and the cooling unit.

In an embodiment, the compartment wall of the battery compartment is formed with an air inlet, the energy storage system further includes an air intake valve covering the air inlet, the air intake valve is sealingly connected to the compartment wall corresponding to the battery compartment, the air intake valve is configured to open or close the air inlet, and when the air intake valve is open, the battery compartment communicates with the exterior of the energy storage box through the air inlet.

In the embodiments of this application, when the switching assembly opens the ventilation opening and the air intake valve opens the air inlet, the exhaust fan is started to discharge the gas in the battery compartment to the outside of the energy storage box through the ventilation opening. During the process in which the gas in the battery compartment is discharged from the ventilation opening, a gas outside the energy storage box is replenished into the battery compartment through the air inlet, so that the thermal runaway gas in the battery compartment can be drawn away from the battery compartment by the exhaust fan as much as possible.

In an embodiment, positions of the ventilation opening and the air inlet satisfy at least one of the following position arrangements:
the ventilation opening is located at an end of the battery compartment in a length direction, and the air inlet is located at another end of the battery compartment in the length direction;
the ventilation opening is located above the air inlet; and
the ventilation opening is located on a side of the battery compartment in a width direction, and the air inlet is located on another side of the battery compartment in the width direction.

In the embodiments of this application, the position arrangement of the air inlet helps to discharge the thermal runaway gas in the battery compartment from the battery compartment as much as possible.

In an embodiment, the energy storage system further includes a main control box for monitoring the battery cluster, and the main control box is located in the battery compartment.

In the embodiments of this application, the main control box is located in the battery compartment, and an operating environment in the battery compartment is better than that outside the battery compartment, so that the main control box operates in a better environment.

Invention effects:
in the energy storage system in the embodiments of this application, a gas in the battery compartment can be discharged outward through the ventilation opening since the ventilation opening communicating with the battery compartment is provided on the partition wall. When thermal runaway occurs in the battery cluster in the battery compartment, the gas in the battery compartment is discharged from the ventilation opening, and the gas discharged from the ventilation opening is discharged out of the energy storage box through the air duct by the exhaust assembly in the auxiliary compartment, thereby preventing the gas generated in thermal runaway from accumulating in the battery compartment as much as possible.

### BRIEF DESCRIPTION OF DRAWINGS

By reading the detailed description of the preferred embodiments below, various other advantages and benefits become clear to those of ordinary skill in the art. The drawings are only for the purpose of illustrating the preferred embodiments and are not considered to limit this application. Moreover, throughout the drawings, the same reference signs denote the same components. In the drawings:
FIG. 1 is a schematic structural diagram of an energy storage system according to an embodiment of this application, showing an internal battery compartment and a battery cluster in the battery compartment;
FIG. 2 is a schematic structural diagram of an energy storage system according to an embodiment of this application, showing a state in which a compartment door is not open;
FIG. 3 is a schematic structural diagram of an energy storage system according to an embodiment of this application, showing a state in which a compartment door is open;
FIG. 4 is a schematic structural diagram of an energy storage system according to an embodiment of this application, showing that a side of an energy storage box in a width direction of the energy storage box facing away from an air inlet is not provided with a door for opening or closing a battery compartment;
FIG. 5 is an assembly diagram of a compartment door, a fan, and a switching apparatus according to an embodiment of this application, in which a spatial structure of a mesh portion is not shown;
FIG. 6 is an enlarged view of position B in FIG. 5;
FIG. 7 is an assembly diagram of a compartment door, a fan, and a switching apparatus according to an embodiment of this application, showing a spatial structure of a mesh portion;
FIG. 8 is an assembly diagram of a compartment door, a fan, a switching assembly, a partition wall, an auxiliary compartment, and a battery compartment according to an embodiment of this application;
FIG. 9 is a cross-sectional view of position A-A in FIG. 1; and

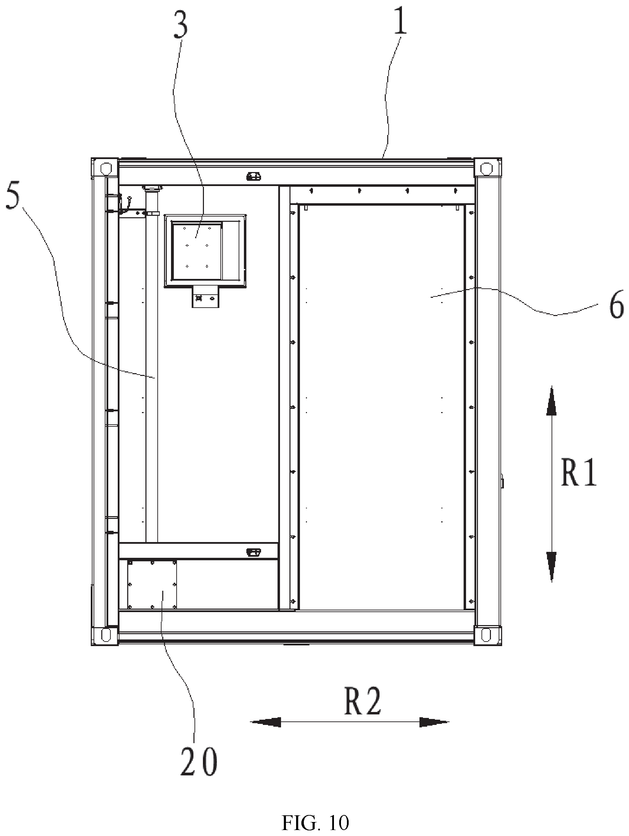

FIG. 10 is an assembly diagram of a sealing plate and a fire control pipe according to an embodiment of this application.

### Reference signs

1. energy storage box; 11. battery compartment; 111. partition wall; 1111. ventilation opening; 112. air inlet; 12. auxiliary compartment; 121. mounting wall; 13. box body; 14. compartment door; 2. battery cluster; 21. battery module; 3. switching assembly; 31. first mounting ring; 32. switching apparatus; 321. exhaust valve; 3211. valve body; 32111. valve port; 3212. valve plate; 32121. thermal insulation layer; 3213. normally closed apparatus; 3214. breathable mesh plate; 32141. mesh portion; 322. air pipe assembly; 3221. exhaust air pipe; 3222. second mounting ring; 3223. buffer pad; 4. exhaust fan; 5. fire control pipe; 6. cooling unit; 7. air intake valve; 8. main control box; 9. water inlet flange; 10. exhaust assembly; 101. air duct; and 20. sealing plate.

### DESCRIPTION OF EMBODIMENTS

Embodiments of the technical solutions of this application are described in detail below with reference to the drawings. The following embodiments are only for more clearly illustrating the technical solutions of this application, and therefore are only examples and cannot be used to limit the protection scope of this application.

Unless otherwise defined, all technical and scientific terms used herein have the same meanings as commonly understood by those skilled in the technical field to which this application pertains; the terms used herein are only for the purpose of describing specific embodiments and are not intended to limit this application; the terms "include" and "have" in the embodiments of this application and any variations thereof are intended to cover non-exclusive inclusion.

In the description of the embodiments of this application, the technical terms "first", "second", "third", and the like are only used to distinguish different objects and cannot be understood as indicating or implying relative importance or implicitly indicating a quantity, specific order, or primary-secondary relationship of the indicated technical features. In the description of the embodiments of this application, "a plurality of" means two or more, unless otherwise explicitly and specifically defined.

Reference herein to "an embodiment" means that a specific feature, structure or characteristic described with reference to the embodiment may be included in at least one embodiment of this application. The appearance of this phrase in various places in the specification does not necessarily refer to the same embodiment, nor is it an independent or alternative embodiment that is mutually exclusive with other embodiments. Those skilled in the art explicitly and implicitly understand that the embodiments described herein may be combined with other embodiments.

In the description of the embodiments of this application, the term "and/or" is merely a description of the association relationship of associated objects, indicating that three relationships may exist, for example, A and/or B may indicate: A alone, A and B together, and B alone. In addition, the character "/" herein generally indicates that the associated objects before and after are in an "or" relationship.

In the description of the embodiments of this application, unless otherwise explicitly specified and defined, the technical terms "mounting", "connection", "joining", "fastening", and the like should be understood in a broad sense, for example, it may be a fixed connection, a detachable connection, or an integrated connection; it may be a mechanical connection or an electrical connection; it may be a direct connection, an indirect connection through an intermediate medium, internal communication of two elements, or an interaction relationship between two elements. For those of ordinary skill in the art, the specific meanings of the above terms in the embodiments of this application can be understood according to specific situations.

In the description of the embodiments of this application, unless otherwise explicitly specified and defined, the technical term "contact" should be understood in a broad sense, which may be direct contact, contact with an intermediate medium layer therebetween, contact between two objects with basically no interaction force therebetween, or contact between two objects with an interaction force therebetween.

In the description of the embodiments of this application, the orientations or position relationships indicated by the technical terms "length", "width", "upper", "lower", "inner", "outer", "circumferential", and the like are based on the orientations or position relationships shown in the drawings, and are only for the convenience of describing the embodiments of this application and simplifying the description, rather than indicating or implying that the referred device or element must have a specific orientation or be constructed and operated in a specific orientation, and therefore cannot be understood as limitations to the embodiments of this application.

As part of the inventive concept of this application, before describing the embodiments of this application, it is necessary to analyze the reasons why it is difficult to discharge a thermal runaway gas in a battery compartment in the event of thermal runaway in the related art, and obtain the technical solutions of the embodiments of this application through reasonable analysis.

In the related art, a battery cluster of an energy storage system includes a plurality of battery modules electrically connected to each other, the battery module may be a battery assembly or battery pack, the battery cluster is mounted in a battery compartment, and the energy storage system does not have a related structure for exhausting the battery compartment. When the battery cluster is in an operating state, the battery cluster is in a relatively closed battery compartment, and a thermal runaway gas cannot be discharged.

An exhaust assembly and a ventilation opening is provided on a partition wall, so that a thermal runaway gas in the battery compartment is discharged from an air duct of the exhaust assembly through the ventilation opening under the action of the exhaust assembly.

The battery pack in the embodiments of this application includes a battery cell.

For example, a battery pack may be directly formed by a plurality of battery cells.

For example, a battery assembly may be formed by a plurality of battery cells, and then a battery pack may be formed by a plurality of battery assemblies.

The battery cell may be provided in plurality, and the plurality of battery cells may be connected in series or in parallel or in series-parallel, where the series-parallel connection means that the plurality of battery cells are connected in both series and parallel. The plurality of battery cells may be directly connected in series or in parallel or in series-parallel to form a battery pack. Certainly, a plurality of battery cells may first be connected in series or in parallel or in series-parallel to form a battery assembly, and then a plurality of battery assemblies may be connected in series or in parallel or in series-parallel to form a battery pack. The battery pack may further include other structures, for example, the battery pack may further include a bus component for realizing electrical connection between a plurality of battery cells.

A battery cell is a basic unit capable of realizing mutual conversion between chemical energy and electrical energy.

In the embodiments of this application, the battery cell may be a secondary battery, where the secondary battery refers to a battery cell that can be reused, by activating an active material by charging, after the battery cell is discharged.

In the embodiments of this application, the battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead-acid battery, or the like. This is not limited in the embodiments of this application.

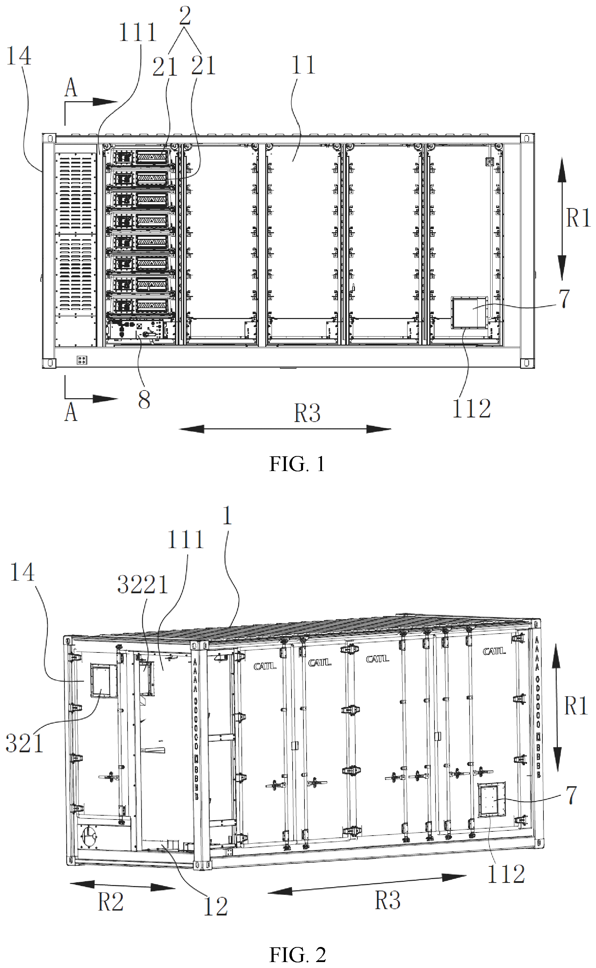

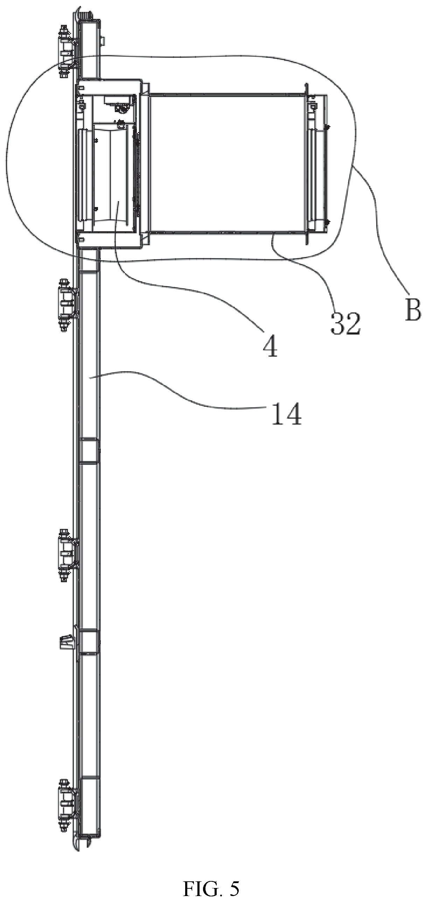

Refer to FIG. 1 to FIG. 3, FIG. 5, FIG. 6, and FIG. 8. The energy storage system in the embodiments of this application includes an energy storage box 1, a battery cluster 2, and an exhaust assembly 10. The energy storage box 1 includes a battery compartment 11 and an auxiliary compartment 12. A partition wall 111 is provided between the battery compartment 11 and the auxiliary compartment 12, and the partition wall 111 is formed with a ventilation opening 1111 communicating with the battery compartment 11. The battery cluster 2 is mounted in the battery compartment 11, and the battery cluster 2 includes a plurality of battery modules 21 electrically connected to each other. The exhaust assembly 10 has an air duct 101; the exhaust assembly 10 is provided at the auxiliary compartment 12; and the exhaust assembly 10 is configured to discharge gas discharged from the ventilation opening 1111 out of the energy storage box 1 through the air duct 101.

The energy storage box 1 is a container for accommodating objects, and most components of the energy storage system are provided in the energy storage box 1.

Refer to FIG. 1 to FIG. 4. For example, the energy storage box 1 is a rectangular parallelepiped.

Refer to FIG. 2 to FIG. 4. For example, a side of the battery compartment 11 in a width direction of the energy storage box 1 is provided with a door for opening or closing the battery compartment 11, and another side is not provided with a door. The energy storage box 1 is in a standard container size.

Refer to FIG. 1 to FIG. 4 and FIG. 9. The width direction of the energy storage box 1 is a direction indicated by R2 in the figures.

For example, there may be one or more battery clusters 2 in the energy storage system.

Refer to FIG. 1. For example, there may be five battery clusters 2 in the energy storage system in the embodiments of this application.

For example, a plurality of battery modules 21 of a same battery cluster 2 are sequentially connected in series.

For example, output voltages of the battery modules 21 of the same battery cluster 2 are equal.

For example, output voltages of the battery clusters 2 are equal.

For example, different battery clusters 2 are connected in parallel with each other.

Refer to FIG. 1. For example, each battery cluster 2 includes eight battery modules 21.

For example, the battery module 21 may be a battery assembly or a battery pack.

In the embodiments of this application, a gas in the battery compartment 11 can be discharged outward through the ventilation opening 111 since the ventilation opening 1111 communicating with the battery compartment 11 is provided on the partition wall 111. When thermal runaway occurs in the battery cluster 2 in the battery compartment 11, the gas in the battery compartment 11 is discharged from the ventilation opening 11, and the a gas discharged from the ventilation opening 1111 is discharged out of the energy storage box 1 through the air duct 101 by the exhaust assembly 10 in the auxiliary compartment 12, thereby preventing gas generated in thermal runaway from accumulating in the battery compartment 11 as much as possible.

In an embodiment, with reference to the figure, the exhaust assembly 10 includes a switching assembly 3 and an exhaust fan 4. The air duct 101 is formed at the switching assembly 3, the switching assembly 3 covers the ventilation opening 1111, the switching assembly 3 is sealingly connected to the partition wall 111, the switching assembly 3 is configured to open or close the ventilation opening 1111, and when the switching assembly 3 opens the ventilation opening 1111, the battery compartment 11 communicates with an exterior of the energy storage box 1 through the ventilation opening 1111. The exhaust fan 4 is configured to discharge a gas discharged from the ventilation opening 1111 out of the energy storage box 1 through the air duct 101, and the exhaust fan 4 is mounted at the switching assembly 3.

A certain level of sealing is required for the battery compartment 11 to reduce the impact of the external environment on the battery cluster 2 in the battery compartment 11. When the battery compartment 11 is in a sealed state, the battery compartment 11 is basically a closed space.

For example, a protection level of the battery compartment 11 is high.

The switching assembly 3 is sealingly connected to the partition wall 111, to limit gas escape between the switching assembly 3 and the partition wall 111.

The switching assembly 3 covering the ventilation opening 1111 is mainly configured to switch a state of the ventilation opening 1111. The ventilation opening 1111 can be switched from an open state to a closed state with the switching assembly 3, and the ventilation opening 1111 can be switched from a closed state to an open state by the switching assembly 3.

For example, when thermal runaway occurs in the battery module 21 of the battery cluster 2 in the battery compartment 11, a gas pressure in the battery compartment 11 rapidly increases. When the gas pressure in the battery compartment 11 is greater than a pressure threshold for the switching assembly 3 to open the ventilation opening 1111, a high-pressure gas in the battery compartment 11 forces open the switching assembly 3, so that the ventilation opening 1111 is switched from the closed state to the open state, and then the fan is started to discharge the thermal runaway gas in the battery compartment 11 as much as possible.

For example, when thermal runaway occurs in the battery module 21 of the battery cluster 2 in the battery compartment 11, a large amount of thermal runaway gases, such as hydrogen and carbon monoxide, accumulates in the battery compartment 11. These thermal runaway gases are flammable gases and can be detected by a sensor. When the sensor detects that a concentration of the flammable gas in the battery compartment 11 reaches a threshold, the sensor transmits a signal to a fire controller. Then the fire controller controls the switching assembly 3 to open the ventilation opening 1111, and the fire controller controls the fan to start, discharging the thermal runaway gas in the battery compartment 11 as much as possible.

The exhaust fan 4 provides power for discharging the gas in the battery compartment 11.

In the embodiments of this application, the state of the ventilation opening 1111 is switched by the switching assembly 3, thereby changing the state of the battery compartment 11. When the battery compartment 11 needs to be sealed, the ventilation opening 1111 is closed by the switching assembly 3. When thermal runaway occurs in the battery module 21 of the battery cluster 2 in the battery compartment 11, the ventilation opening 1111 is opened by the switching assembly 3, so that the battery compartment 11 communicates with the exterior of the energy storage box 1 through the ventilation opening 1111, and under the action of the exhaust fan 4, the thermal runaway gas in the battery compartment 11 can be quickly discharged to the outside of the energy storage box 1 through the ventilation opening 1111. Since the switching assembly 3 and the exhaust fan 4 are provided at the ventilation opening 1111 of the partition wall 111, in the energy storage system, the battery compartment 11 can be sealed as much as possible while the battery module 21 of the battery cluster 2 is in a normal operating state, and the thermal runaway gas in the battery compartment 11 can be discharged to the outside of the energy storage box 1 as quickly as possible during thermal runaway in the battery compartment 11.

In an embodiment, with reference to FIG. 1, a plurality of battery modules 21 of the same battery cluster 2 are sequentially arranged in an up-down direction.

Refer to FIG. 1 to FIG. 4 and FIG. 9. The up-down direction is a direction indicated by arrow R1 in the figures.

In the embodiments of this application, the plurality of battery modules 21 of the same battery cluster 2 are sequentially arranged in the up-down direction, the plurality of battery modules 21 of the same battery cluster 2 are located at different height positions, and one battery module 21 of the same battery cluster 2 is provided at a same height, which helps to reduce a quantity of battery modules 21 in the battery cluster 2, and correspondingly reduce structures matching the battery modules 21, that is, simplifying redundant structures of the energy storage system.

It can be understood that the arrangement of the plurality of battery modules 21 of the same battery cluster 2 is not limited. For example, each battery cluster 2 includes a plurality of columns of battery modules 21; the plurality of battery modules 21 in each column are arranged in the up-down direction; and the columns of battery modules 21 are arranged in the width direction of the energy storage box 1.

In an embodiment, with reference to FIG. 1, the energy storage system further includes a main control box 8 for monitoring the battery cluster 2. The main control box 8 is located in the battery compartment 11.

For example, with reference to FIG. 1, each battery cluster 2 corresponds to one main control box 8, and the operating state of each battery cluster 2 is monitored by the corresponding main control box 8.

For example, with reference to FIG. 1, the battery cluster 2 and the main control box 8 are arranged in the up-down direction.

For example, with reference to FIG. 1, the main control box 8 is located below the battery cluster 2.

In the embodiments of this application, an operating environment in the battery compartment 11 is better than that outside the battery compartment 11, and placing the main control box 8 in the battery compartment 11 enables the main control box 8 to operate in a better environment. The main control box 8 is in the battery compartment 11, and there is no need to arrange a sealing member for sealing the battery compartment 11 between the main control box 8 and the battery cluster 2. This helps to increase a spacing between battery module 21 and reduce a possibility of interference between two adjacent battery modules 21.

It can be understood that the arrangement of the main control box 8 is not limited. For example, the main control box 8 is located outside the battery compartment 11.

In an embodiment, with reference to FIG. 1 to FIG. 3 and FIG. 5 to FIG. 8, the switching assembly 3 includes a first mounting ring 31 and a switching apparatus 32. The first mounting ring 31 surrounds an outer side of the ventilation opening 1111, and the first mounting ring 31 is sealingly connected to the partition wall 111 to limit the gas escape between the first mounting ring 31 and the partition wall 111. The switching apparatus 32 is sealingly connected to the first mounting ring 31, the air duct 101 is formed at the switching apparatus 32, and the switching apparatus 32 is configured to open or close the ventilation opening 1111.

The first mounting ring 31 provides a mounting position for the switching apparatus 32.

For example, the switching apparatus 32 and the first mounting ring 31 are detachably connected by a bolt, and a hole through which the bolt passes to realize detachable connection is formed at the first mounting ring 31.

For example, the first mounting ring 31 and the partition wall 111 are bonded by an adhesive.

For example, the first mounting ring 31 and the partition wall 111 are welded.

For example, the first mounting ring 31 and the partition wall 111 are welded and then sealed with a sealant.

The switching apparatus 32 is sealingly connected to the first mounting ring 31, to limit gas escape between the switching apparatus 32 and the first mounting ring 31.

In the embodiments of this application, the switching apparatus 32 is configured to open or close the ventilation opening 1111, and disassembly and replacement for maintenance is required for the switching apparatus 32. The first mounting ring 31 is sealingly connected to the partition wall 111, limiting gas escape between the first mounting ring 31 and the partition wall 111, and providing the battery compartment 11 with good sealing performance when the switching apparatus 32 closes the ventilation opening 1111. The first mounting ring 31 provides a basis for sealed mounting of the switching apparatus 32, and a surface for sealed mounting of the switching apparatus 32 can be provided on the first mounting ring 31 as actually required, providing strong flexibility for sealed mounting of the switching apparatus 32. The first mounting ring 31 is detachably connected to the switching apparatus 32, so that when the switching apparatus 32 needs to be replaced for maintenance, the to-be-replaced switching apparatus 32 may be removed from the first mounting ring 31, and a new switching apparatus 32 can be mounted on the first mounting ring 31. The switching apparatus 32 is detachably connected to the first mounting ring 31, and the first mounting ring 31 and the partition wall 111 may not be disassembled, which can reduce damage to the partition wall 111 caused by structure disassembly.

It can be understood that the specific arrangement of the switching apparatus 32 is not limited. For example, the first mounting ring 31 may not be provided, and the switching apparatus 32 is detachably and sealingly connected to the partition wall 111.

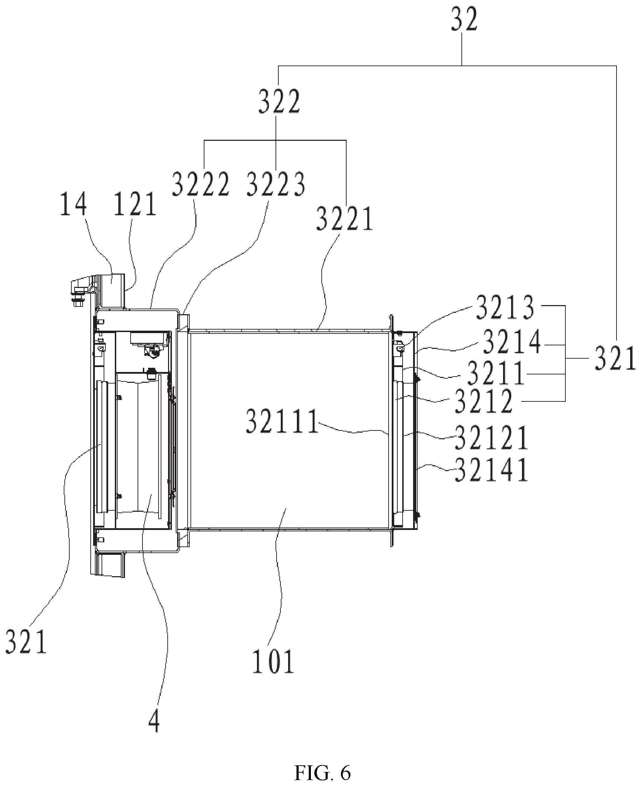

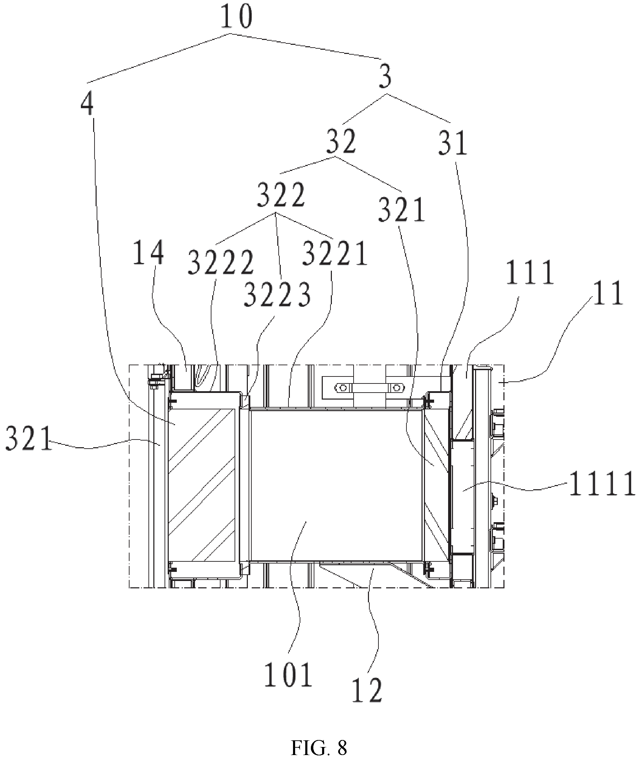

In an embodiment, with reference to FIG. 6 and FIG. 8, the switching apparatus 32 includes an exhaust valve 321 and an air pipe assembly 322. At least one exhaust valve 321 is provided. At least one exhaust valve 321 is sealingly connected to the first mounting ring 31 to limit gas escape between the first mounting ring 31 and the corresponding exhaust valve 321, and the exhaust valve 321 is configured to open or close the ventilation opening 1111. The air pipe assembly 322 and the exhaust fan 4 are both located on a side of the exhaust valve 321 sealingly connected to the first mounting ring 31 facing away from the battery compartment 11. The air duct 101 spans the exhaust valve 321 and the air pipe assembly 322; the exhaust fan 4 is mounted in the air pipe assembly 322; and an end of the air pipe assembly 322 facing the first mounting ring 31 is sealingly connected to the first mounting ring 31 and/or the corresponding exhaust valve 321.

The air pipe assembly 322 is a structure for passage of airflow.

The exhaust valve 321 is mainly configured to switch the state of the ventilation opening 1111.

An end of the air pipe assembly 322 facing the first mounting ring 31 is sealingly connected to the first mounting ring 31 and/or the corresponding exhaust valve 321, to limit gas escape from the end of the air pipe assembly 322 facing the first mounting ring 31.

In the embodiments of this application, the first mounting ring 31 is sealingly connected to the partition wall 111, and the exhaust valve 321 is sealingly connected to the first mounting ring 31. When the exhaust valve 321 closes the ventilation opening 1111, the gas in the battery compartment 11 cannot escape from a space between the first mounting ring 31 and the partition wall 111, from a space between the exhaust valve 321 and the first mounting ring 31, or from the ventilation opening 1111, providing the battery compartment 11 with good sealing performance. The air pipe assembly 322 and the fan are both located on a side of the exhaust valve 321 sealingly connected to the first mounting ring 31 facing away from the battery compartment 11, and the exhaust valve 321 sealingly connected to the first mounting ring 31 is relatively close to the ventilation opening 1111. When the exhaust valve 321 sealingly connected to the first mounting ring 31 closes the ventilation opening 1111, the gas in the battery compartment 11 is blocked as much as possible on a side of the exhaust valve 321 corresponding to the first mounting ring 31 facing the battery compartment 11. In a case where the battery cluster 2 operates normally, heat exchange between a gas in the battery compartment 11 and an environment outside the battery compartment 11 can be reduced, thereby reducing the impact of the external environment on the environment in the battery compartment 11. The exhaust fan 4 is mounted in the air pipe assembly 322, and an end of the air pipe assembly 322 facing the first mounting ring 31 is sealingly connected to the first mounting ring 31 and/or the corresponding exhaust valve 321, so that airflow flowing from the exhaust valve 321 to the air pipe assembly 322 can be discharged quickly through the fan as much as possible.

It can be understood that the arrangement of the exhaust valve 321 is not limited. For example, the air pipe assembly 322 and the exhaust fan 4 may be arranged on a side of the exhaust valve 321 corresponding to the first mounting ring 31 facing the ventilation opening 1111 as appropriate.

In an embodiment, with reference to FIG. 2, FIG. 3, FIG. 6 and FIG. 8, the exhaust valve 321 includes a valve body 3211, a valve plate 3212, and a normally closed apparatus 3213. The first mounting ring 31 is sealingly connected to the valve body 3211 of the corresponding exhaust valve 321. The air duct 101 spans the valve body 3211 and the air pipe assembly 322. The valve body 3211 has a valve port 32111 communicating with the air duct 101. The valve plate 3212 is movably mounted at the valve body 3211 to open or close the valve port 32111. The valve plate 3212 is in a position closing the valve port 32111 to enable the exhaust valve 321 to close the ventilation opening 1111. The valve plate 3212 is in a position opening the valve port 32111 to enable the exhaust valve 321 to open the ventilation opening 1111. When the valve plate 3212 closes the valve port 32111, the valve plate 3212 and the valve body 3211 are sealed against each other. The normally closed apparatus 3213 is mounted at the valve body 3211, and the normally closed apparatus 3213 is configured to keep the valve plate 3212 in the position closing the valve port 32111 under a normal condition.

The valve body 3211 is a main structure of the exhaust valve 321, and the valve body 3211 provides mounting support for other structures of the exhaust valve 321.

The valve plate 3212 is a structure for switching the state of the ventilation opening 1111, and the state of the ventilation opening 1111 is switched through opening or closing the valve port 32111 by the valve plate 3212.

The normal condition refers to a state that is basically not affected by an external environment. For example, the influence of the external environment may be the influence of an external force, for example, the external force may be a force applied by a high-pressure gas to the normally closed apparatus 3213. The normally closed apparatus 3213 keeps the valve plate 3212 in the position closing the valve port 32111 without being affected by the external force, and the normally closed apparatus 3213 enables the valve plate 3212 to open the valve port 32111 under the action of the external force.

The first mounting ring 31 is sealingly connected to the valve body 3211 of the corresponding exhaust valve 321, to limit gas escape between the first mounting ring 31 and the corresponding valve body 3211.

For example, the normally closed apparatus 3213 may be an elastic member that contacts the valve plate 3212 and applies a certain force to the valve plate 3212. When an external force received by the valve plate 3212 is less than an elastic force of the elastic member, the valve plate 3212 keeps the valve port 32111 closed under the elastic force of the elastic member. When the external force received by the valve plate 3212 is greater than the elastic force of the elastic member, the valve plate 3212 overcomes the elastic force of the elastic member to open the valve port 32111. For example, when thermal runaway occurs in the battery module 21 in the battery compartment 11, a high-pressure gas in the battery compartment 11 acts on the valve plate 3212 to force open the valve plate 3212, so that the valve plate 3212 overcomes the elastic force of the elastic member to open the valve port 32111.

For example, the normally closed apparatus 3213 may be a motor, and the motor drives the valve plate 3212 to move to open or close the valve port 32111. The influence of the external environment may be a concentration of a flammable gas generated in thermal runaway. When a sensor detects that the concentration of the flammable gas reaches a threshold, the fire controller controls the motor to drive the valve plate 3212 to open the valve port 32111.

For example, the movement may be translation, and the valve plate 3212 translates relative to the valve body 3211.

For example, the movement may be rotation, and the valve plate 3212 is rotationally connected to the valve body 3211.

For example, the valve plate 3212 and the valve body 3211 are sealed by a sealing ring.

For example, the sealing ring has a barb-like structure, and the barb-like structure cooperates with the valve body 3211 to increase a friction between the sealing ring and the valve body 3211.

In the embodiments of this application, in a case where the battery cluster 2 operates normally, the normally closed apparatus 3213 keeps the valve plate 3212 in the position closing the valve port 32111 to close the ventilation opening 1111, thereby sealing the battery compartment 11. When thermal runaway occurs in the battery compartment 11, the valve plate 3212 opens the valve port 32111 to discharge the gas in the battery compartment 11. Since the first mounting ring 31 is sealingly connected to the valve body 3211 of the corresponding exhaust valve 321 to limit gas escape between the first mounting ring 31 and the corresponding valve body 3211, when the valve plate 3212 closes the valve port 32111, gas in the battery compartment 11 basically does not escape from a space between the valve body 3211 and the first mounting ring 31, providing the battery compartment 11 with good sealing performance.

It can be understood that the battery compartment 11 can be thermally insulated to reduce the impact of the environment outside the battery compartment 11 on the interior of the battery compartment 11. For example, the partition wall 111 can thermally insulate the battery compartment 11.

In an embodiment, with reference to FIG. 6, the partition wall 111 and the valve plate 3212 are both provided with a thermal insulation layer 32121.

In the embodiments of this application, the partition wall 111 is provided with the thermal insulation layer 32121 for thermally insulating the battery compartment 11. When the valve plate 3212 closes the valve port 32111, the thermal insulation layer 32121 on the valve plate 3212 can reduce heat exchange between airflow on a side of the valve plate 3212 facing the ventilation opening 1111 and airflow on a side of the valve plate 3212 facing away from the ventilation opening 1111, reducing the impact of the environment outside the battery compartment 11 on the interior of the battery compartment 11.

It can be understood that the specific structure of the exhaust valve 321 is not limited. For example, the valve plate 3212 may not be provided with the thermal insulation layer 32121. For example, the exhaust valve 321 may adopt a ball valve as appropriate.

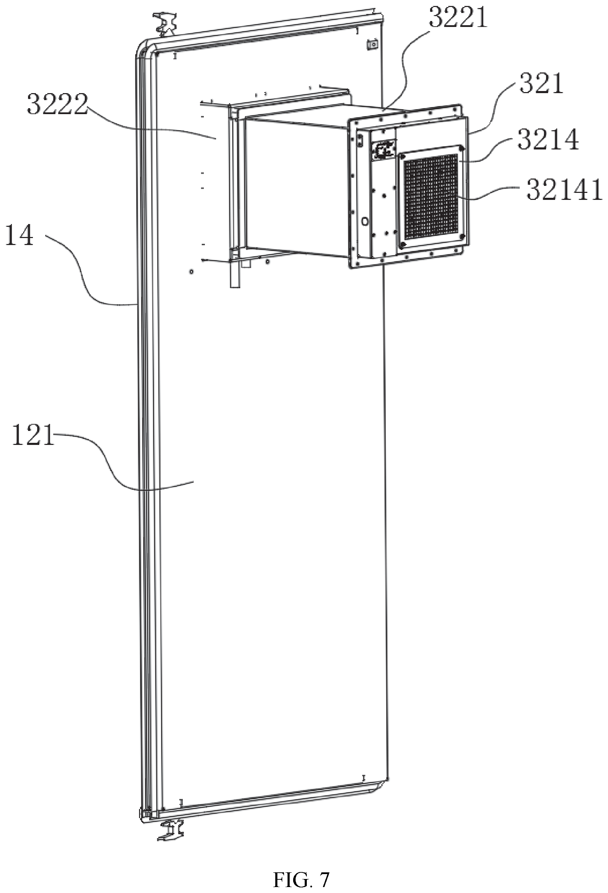

In an embodiment, with reference to FIG. 6 and FIG. 7, the exhaust valve 321 further includes a breathable mesh plate 3214 connected to the valve body 3211; the breathable mesh plate 3214 has a mesh portion 32141 allowing air to pass; and the mesh portion 32141 is located on a side of the valve plate 3212 facing the ventilation opening 1111.

The mesh portion 32141 is an interwoven mesh structure, and air passes through mesh holes of the mesh portion 32141.

In the embodiments of this application, air passes through the mesh portion 32141 of the breathable mesh plate 3214, and the mesh portion 32141 does not completely block gas. In thermal runaway in the battery compartment 11, the thermal runaway gas in the battery compartment 11 can be discharged to the outside of the energy storage box 1 through the mesh portion 32141 and the ventilation opening 1111. The mesh portion 32141 is located on the side of the valve plate 3212 facing the ventilation opening 1111, to prevent the valve from being accidentally touched. The mesh portion 32141 is located on the side of the valve plate 3212 facing the ventilation opening 1111, and the mesh portion 32141 can block foreign matter in the battery compartment 11 to a certain extent, preventing foreign matter in the battery compartment 11 from flowing to the fan and the exhaust valve 321 through the ventilation opening 1111, reducing a possibility of the fan being damaged by foreign matter, and reducing a possibility that foreign matter stagnates at the valve port 32111 and hinders the valve plate 3212 from opening or closing the valve port 32111.

It can be understood that the exhaust valve 321 may not include the breathable mesh plate 3214.

In an embodiment, with reference to FIG. 6 and FIG. 8, the air pipe assembly 322 includes an exhaust air pipe 3221 and a second mounting ring 3222. The exhaust air pipe 3221 is located in the auxiliary compartment 12, and an end of the exhaust air pipe 3221 facing the first mounting ring 31 is sealingly connected to the first mounting ring 31 and/or the corresponding exhaust valve 321. The second mounting ring 3222 is located at an end of the exhaust air pipe 3221 facing away from the first mounting ring 31. The second mounting ring 3222 is connected to a compartment wall of the auxiliary compartment 12. The second mounting ring 3222 and the exhaust air pipe 3221 are sealingly connected to each other. The air duct 101 spans the second mounting ring 3222, the exhaust air pipe 3221 and the exhaust valve 321. The second mounting ring 3222 surrounds the exhaust fan 4.

The exhaust air pipe 3221 is a pipe structure for airflow.

An end of the exhaust air pipe 3221 facing the first mounting ring 31 is sealingly connected to the first mounting ring 31 and/or the corresponding exhaust valve 321, to limit gas escape from the end of the exhaust air pipe 3221 facing the first mounting ring 31.

The second mounting ring 3222 and the exhaust air pipe 3221 are sealingly connected to each other, to limit gas escape between the second mounting ring 3222 and the exhaust air pipe 3221.

In the embodiments of this application, an end of the exhaust air pipe 3221 in the auxiliary compartment 12 facing the first mounting ring 31 is sealingly connected to the first mounting ring 31 and/or the exhaust valve 321, so that the gas basically does not escape from a space between the exhaust air pipe 3221 and the first mounting ring 31, and the gas in the auxiliary compartment 12 does not enter the exhaust air pipe 3221 from the space between the first mounting ring 31 and the exhaust air pipe 3221, so that the gas flowing from the ventilation opening 1111 and the exhaust valve 321 into the exhaust air duct can be discharged out of the energy storage box 1 as quickly as possible through the exhaust air pipe and the exhaust fan 4 under the action of the exhaust fan 4 at the second mounting ring 3222. An end of the exhaust air pipe 3221 in the auxiliary compartment 12 facing the first mounting ring 31 is sealingly connected to the first mounting ring 31 and/or the exhaust valve 321. The second mounting ring 3222 is connected to the compartment wall of the auxiliary compartment 12. The second mounting ring 3222 and the exhaust air pipe 3221 are sealed against each other. Since these connection positions are all sealed, during the process in which airflow is discharged outward from the exhaust valve 321 through the exhaust air pipe 3221 and the exhaust fan 4 at the second mounting position, the thermal runaway gas basically does not diffuse into the auxiliary compartment 12, but is discharged to the outside of the energy storage box 1 under the action of the fan. The second mounting ring 3222 is connected to the compartment wall of the auxiliary compartment 12, and the second mounting ring 3222 surrounds the exhaust fan 4, which helps the second mounting ring 3222 to better support the mounting of the exhaust fan 4. The second mounting ring 3222 connected to the compartment wall of the auxiliary compartment 12 is sealingly mounted with the exhaust air pipe 3221, so that the second mounting ring 3222 can better support the end of the exhaust air pipe 3221 facing away from the first mounting ring 31, alleviating suspension of the end of the air pipe assembly 322 facing away from the first mounting ring 31.

It can be understood that the structure of the air pipe assembly 322 is not limited. For example, the second mounting ring 3222 may not be provided, and the exhaust air pipe 3221 is sealingly connected to the compartment wall of the auxiliary compartment 12.

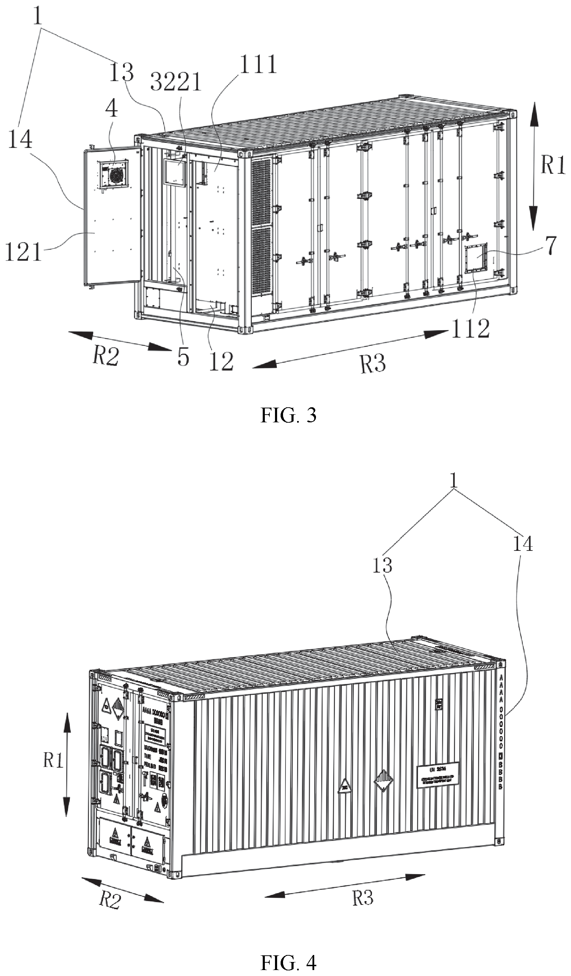

In an embodiment, with reference to FIG. 3, FIG. 6 and FIG. 8, the energy storage box 1 includes a box body 13 and a compartment door 14 mounted on the box body 13. The box body 13 and the compartment door 14 encloses the auxiliary compartment 12. The second mounting ring 3222 is connected to the compartment door 14. The air pipe assembly 322 further includes a buffer pad 3223 located between the exhaust air pipe 3221 and the second mounting ring 3222. The air duct 101 spans the second mounting ring 3222, the exhaust air pipe 3221, the buffer pad 3223 and the exhaust valve 321. One of the second mounting ring 3222 and the exhaust air pipe 3221 is connected to the buffer pad 3223, and the other of the second mounting ring 3222 and the exhaust air pipe 3221 can abut against or separate from the buffer pad 3223, and when the compartment door 14 is closed, the buffer pad 3223 implements sealing between the second mounting ring 3222 and the exhaust air pipe 3221.

The compartment door 14 is a structure capable of opening or closing the auxiliary compartment 12.

For example, the second mounting ring 3222 is connected to the buffer pad 3223, and the exhaust air pipe 3221 can abut against or separate from the buffer pad 3223. When the compartment door 14 is closed, the buffer pad 3223 connected to the second mounting ring 3222 is squeezed by the exhaust air pipe 3221, so that the buffer pad 3223 implements sealing between the second mounting ring 3222 and the exhaust air pipe 3221.

For example, the exhaust air pipe 3221 is connected to the buffer pad 3223, and the second mounting ring 3222 can abut against or separate from the buffer pad 3223. When the compartment door 14 is closed, the buffer pad 3223 connected to the exhaust air pipe 3221 is squeezed by the second mounting ring 3222, so that the buffer pad 3223 implements sealing between the second mounting ring 3222 and the exhaust air pipe 3221.

For example, the second mounting ring 3222 may be sealingly connected to the compartment door 14.

For example, with reference to FIG. 6 and FIG. 8, the second mounting ring 3222 passes through the compartment door 14.

For example, the second mounting ring 3222 and the compartment door 14 are welded and then sealed with a sealant.

In the embodiments of this application, the second mounting ring 3222 is connected to the compartment door 14, and the second mounting ring 3222 is supported by the compartment door 14. Since one of the second mounting ring 3222 and the exhaust air pipe 3221 is connected to the buffer pad 3223, and the other of the second mounting ring 3222 and the exhaust air pipe 3221 can abut against or separate from the buffer pad 3223, the second mounting ring 3222 can be separated from the exhaust air pipe 3221, the compartment door 14 can open the auxiliary compartment 12, and when the compartment door 14 closes the auxiliary compartment 12, the buffer pad 3223 is squeezed by the second mounting ring 3222 and the exhaust air pipe 3221. This can better achieve sealing between the second mounting ring 3222 and the exhaust air pipe 3221.

It can be understood that the arrangement of the second mounting ring 3222 is not limited. For example, the second mounting ring 3222 may be connected to the box body 13.

It can be understood that the structure of the energy storage box 1 is not limited. For example, the energy storage box 1 may not be provided with the compartment door 14, and the auxiliary compartment 12 is formed at the box body 13.

In an embodiment, with reference to FIG. 6 and FIG. 8, at least two exhaust valves 321 are provided. At least one exhaust valve 321 is located on a side of the exhaust fan 4 facing away from the exhaust air pipe 3221. The second mounting ring 3222 is sealingly connected to the corresponding exhaust valve 321.

In the embodiments of this application, one exhaust valve 321 is located on a side of the exhaust fan 4 facing away from the exhaust air pipe 3221, the exhaust valve 321 corresponding to the first mounting ring 31 is located on a side of the exhaust fan 4 facing the exhaust air pipe 3221, and the exhaust fan 4 is located between two exhaust valves 321. The exhaust valves 321 on two sides of the exhaust fan 4 are closed. In this way, heat exchange of airflow on a side of the exhaust valve 321 corresponding to the first mounting ring 31 facing the ventilation opening 1111 is reduced; and debris outside the energy storage box 1 can be blocked by the exhaust valve 321 located on the side of the exhaust fan 4 facing away from the exhaust air pipe 3221, reducing the possibility of foreign matter entering the fan and causing damage to the fan.

It can be understood that a quantity and arrangement of the exhaust valve 321 are not limited, as long as the ventilation opening 1111 can be opened or closed by the exhaust valve 321.

In an embodiment, with reference to FIG. 3, FIG. 6, FIG. 7 and FIG. 8, the compartment wall of the auxiliary compartment 12 includes a mounting wall 121 opposite the partition wall 111; an end of the switching assembly 3 facing away from the ventilation opening 1111 is mounted on the mounting wall 121; and the gas in the battery compartment 11 is discharged through the ventilation opening 1111, the air duct 101 and the mounting wall 121.

For example, with reference to FIG. 3, FIG. 6, and FIG. 7, the mounting wall 121 is formed at the compartment door 14.

In the embodiments of this application, since the mounting wall 121 is opposite the partition wall 111, gas in the battery compartment 11 is discharged from the mounting wall 121 through the ventilation opening 1111 of the partition wall 111, so that a flow distance for discharging the gas in the battery compartment 11 from the energy storage box 1 is short, which helps to quickly discharge the gas in the battery compartment 11 from the energy storage box 1.

It can be understood that the arrangement of the mounting wall 121 is not limited. For example, the mounting wall 121 connected to an end of the switching assembly 3 facing away from the ventilation opening 1111 may be arranged to intersect with the partition wall 111, and the mounting wall 121 is connected to the partition wall 111.

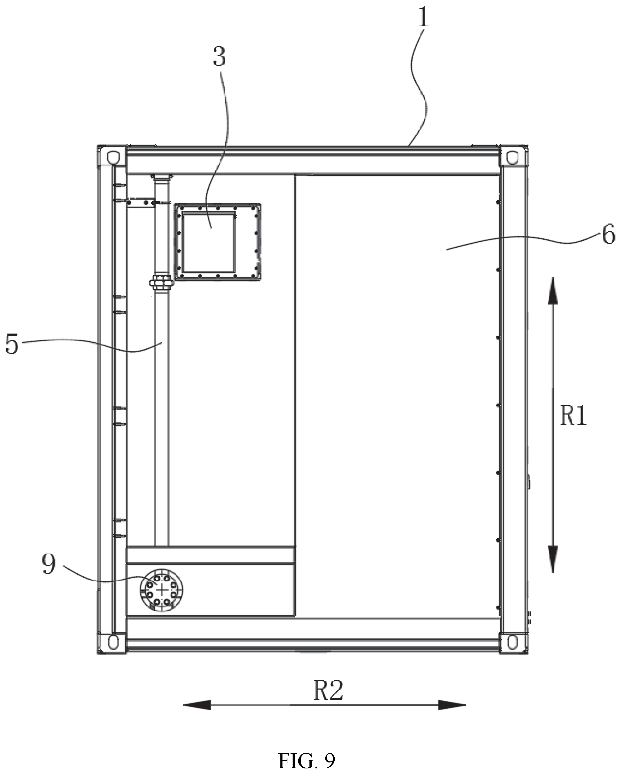

In an embodiment, with reference to FIG. 9, the energy storage system further includes a cooling unit 6. The cooling unit 6 is configured to cool the battery cluster 2. The cooling unit 6 is located on a side of the auxiliary compartment 12 in the width direction of the energy storage box 1. The switching assembly 3 is located on another side of the auxiliary compartment 12 along the width direction of the energy storage box 1.

The cooling unit 6 is configured to cool the battery cluster 2, and a temperature of the battery cluster 2 during operation should not be excessively high. When the temperature of the battery cluster 2 is greater than a threshold, the cooling unit 6 cools the battery cluster 2.

For example, the cooling unit 6 performs water cooling on the battery cluster 2, and cooling water provided by the cooling unit 6 flows through a water cooling plate of battery module 21 in the battery cluster 2 to cool the battery modules 21. The cooling water circulates between the cooling unit 6 and the battery module 21 of the battery cluster 2.

Refer to FIG. 2 to FIG. 4, and FIG. 9, the width direction of the energy storage box 1 is the direction indicated by arrow R2 in the figures.

In the embodiments of this application, the cooling unit 6 is placed in the auxiliary compartment 12, and the cooling unit 6 is located on a side of the auxiliary compartment 12 in the width direction of the energy storage box 1. The cooling unit 6 does not occupy the entire auxiliary compartment 12. The cooling unit 6 is located on the side of the auxiliary compartment 12 in the width direction of the energy storage box 1, and the switching assembly 3 is located on another side of the auxiliary compartment 12 in the width direction of the energy storage box 1. In this way, a space of the auxiliary compartment 12 in the width direction of the energy storage box 1 can be utilized as much as possible to accommodate both the cooling unit 6 and the switching assembly 3, improving the space utilization in the energy storage box 1.

In an embodiment, with reference to FIG. 9, the energy storage system further includes a fire control pipe 5, where the fire control pipe 5 is configured to supply firefighting water to the battery compartment 11, and the fire control pipe 5 is located on a side of the auxiliary compartment 12 along the width direction of the energy storage box 1 facing away from the cooling unit 6.

The fire control pipe 5 is mainly configured to supply firefighting water to the battery compartment 11.

Refer to FIG. 9. For example, a water inlet pipe of the fire control pipe 5 has a water inlet flange 9, and the water inlet flange 9 is configured to connect to a flange of an external water supply pipe. During transportation, the water inlet flange 9 may be sealed by a sealing plate 20. When the fire control pipe 5 of the energy storage system is mounted and used, the sealing plate 20 on the water inlet flange 9 is removed to expose the water inlet flange 9, and the water inlet flange 9 is connected to the flange of the external water supply pipe.

In the embodiments of this application, the fire control pipe 5 is located on a side of the auxiliary compartment 12 in the width direction of the energy storage box 1 facing away from the cooling unit 6. In this way, a space of the auxiliary compartment 12 in the width direction of the energy storage box 1 can be utilized as much as possible to accommodate the cooling unit 6, the fire control pipe 5, and the switching assembly 3, improving the space utilization in the energy storage box 1.

It can be understood that the arrangement of the fire control pipe 5 and the switching assembly 3 is not limited. For example, the energy storage box 1 has two accommodation spaces in the length direction of the energy storage box 1, and in the two accommodation spaces in the length direction of the energy storage box 1, the fire control pipe 5 and the switching assembly 3 are located in one accommodation space, and the cooling unit 6 is located in the other accommodation space.

In an embodiment, with reference to FIG. 1 to FIG. 3, a compartment wall of the battery compartment 11 is formed with an air inlet 112; the energy storage system further includes an air intake valve 7 covering the air inlet 112; the air intake valve 7 is sealingly connected to the corresponding compartment wall of the battery compartment 11; the air intake valve 7 is configured to open or close the air inlet 112; and when the air intake valve 7 is open, the battery compartment 11 communicates with the outside of the energy storage box 1 through the air inlet 112.

The air inlet 112 is an opening for gas outside the battery compartment 11 to enter the battery compartment 11.

Refer to FIG. 3. For example, the air inlet 112 is formed at another compartment wall of the battery compartment 11 except the partition wall 111.

In the embodiments of this application, when the switching assembly 3 opens the ventilation opening 1111 and the air intake valve 7 opens the air inlet 112, the exhaust fan 4 is started to discharge the gas in the battery compartment 11 to the outside of the energy storage box 1 through the ventilation opening 1111. During the process in which the gas in the battery compartment 11 is discharged from the ventilation opening 1111, a gas outside the energy storage box 1 is replenished into the battery compartment 11 through the air inlet 112, so that the thermal runaway gas in the battery compartment 11 can be drawn away from the battery compartment 11 by the exhaust fan 4 as much as possible.

It can be understood that the battery compartment 11 may not be provided with the air inlet 112 as appropriate.

In an embodiment, with reference to FIG. 1 to FIG. 3, positions of the ventilation opening 1111 and the air inlet 112 satisfy at least one of the following position arrangements:
the ventilation opening 1111 is located at an end of the battery compartment 11 in a length direction, and the air inlet 112 is located at another end of the battery compartment 11 in the length direction;
the ventilation opening 1111 is located above the air inlet 112; and
the ventilation opening 111 is located on a side in a width direction of the battery compartment 11, and the air inlet 112 is located on another side in the width direction of the battery compartment 11.

Refer to FIG. 1 to FIG. 3. The length direction of the energy storage box 1 is a direction indicated by arrow R3 in the figures.

Refer to FIG. 1 to FIG. 3. For example, the air inlet 112 is located on a compartment wall of the battery compartment 11 along the width direction of the energy storage box 1.

In the embodiments of this application, since the ventilation opening 1111 is located at an end of the battery compartment 11 in the length direction, and the air inlet 112 is located at another end of the battery compartment 11 in the length direction, the path for gas to flow from the air inlet 112 to the ventilation opening 1111 through the battery compartment 11 is long, and gas flowing from the air inlet 112 to the ventilation opening 1111 through the battery compartment 11 can sweep most of the space in the battery compartment 11, improving air mobility in the battery compartment 11 and facilitating discharge of the gas in the battery compartment 11 from the ventilation opening 1111. Since most thermal runaway gases are flammable gases with low densities, such as hydrogen and carbon monoxide, these thermal runaway gases float and accumulate at the top of the battery compartment 11. The ventilation opening 1111 is arranged above the air inlet 112. When the switching assembly 3 opens the ventilation opening 1111 and the air intake valve 7 opens the air inlet 112, gas outside the energy storage box 1 enters the lower part of the battery compartment 11 from the air inlet 112 and gradually moves upward to the ventilation opening 1111. During the process in which the gas moves to the ventilation opening 1111, the gas in the battery compartment 11 is stirred and then moves upward, helping to drive discharge of the low-density thermal runaway gas in the battery compartment 11 accumulated at the top of the battery compartment 11 from the battery compartment 11 through the ventilation opening 1111. When the ventilation opening 1111 is located at an end of the battery compartment 11 in the length direction, and the air inlet 112 is located at another end of the battery compartment 11 in the length direction, the ventilation opening 1111 is located above the air inlet 112; the ventilation opening 111 is located on a side of the battery compartment 11 in the width direction; and the air inlet 112 is located on another side of the battery compartment 11 in the width direction. All the three position arrangements satisfy that the ventilation opening 1111 and the air inlet 112 are roughly diagonally opposite in the space of the energy storage box, so that the path for gas to flow from the air inlet 112 to the ventilation opening 1111 through the battery compartment 11 is long, and gas flowing from the air inlet 112 to the ventilation opening 1111 through the battery compartment 11 can flow through most of the space in the battery compartment 11. This helps to drive discharge of the thermal runaway gas in the battery compartment 11.

It can be understood that the position arrangement of the air inlet 112 is not limited. For example, the air inlet 112 may be located at an end of the battery compartment 11 in the length direction facing the ventilation opening 1111, that is, the air inlet 112 and the ventilation opening 1111 are located at the same end of the battery compartment 11 in the length direction. For example, the air inlet 112 may be located above the ventilation opening 1111.

The above embodiments are only for illustrating the technical solutions of this application and are not intended to limit them; although this application is described in detail with reference to the foregoing embodiments, those of ordinary skill in the art should understand that they can still modify the technical solutions described in the foregoing embodiments or equivalently replace some or all of the technical features; and these modifications or replacements do not make the essence of the corresponding technical solutions deviate from the scope of the technical solutions of the embodiments of this application, and they should all be covered in the scope of this application. In particular, as long as there is no structural conflict, the technical features mentioned in the embodiments can be combined in any way.

## Claims

1. An energy storage system, comprising:
an energy storage box, comprising a battery compartment and an auxiliary compartment, wherein a partition wall is provided between the battery compartment and the auxiliary compartment, and the partition wall is formed with a ventilation opening communicating with the battery compartment;
a battery cluster, mounted in the battery compartment, wherein the battery cluster comprises a plurality of battery modules electrically connected to each other; and
an exhaust assembly, having an air duct and disposed at the auxiliary compartment, wherein the exhaust assembly is configured to discharge a gas discharged from the ventilation opening out of the energy storage box through the air duct.

2. The energy storage system according to claim 1, wherein the exhaust assembly comprises:
a switching assembly, wherein the air duct is formed at the switching assembly, the switching assembly covers the ventilation opening, the switching assembly is sealingly connected to the partition wall, the switching assembly is configured to open or close the ventilation opening, and when the switching assembly opens the ventilation opening, the battery compartment communicates with an exterior of the energy storage box through the ventilation opening; and
an exhaust fan, configured to discharge the gas discharged from the ventilation opening out of the energy storage box through the air duct, wherein the exhaust fan is mounted at the switching assembly.

3. The energy storage system according to claim 2, wherein the switching assembly comprises:
a first mounting ring, surrounding an outer side of the ventilation opening, wherein the first mounting ring is sealingly connected to the partition wall; and
a switching apparatus, detachably connected to the first mounting ring, wherein the switching apparatus is sealingly connected to the first mounting ring; the air duct is formed at the switching apparatus; and the switching apparatus is configured to open or close the ventilation opening.

4. The energy storage system according to claim 3, wherein the switching apparatus comprises:
an exhaust valve, wherein at least one exhaust valve is provided, wherein the at least one exhaust valve is sealingly connected to the first mounting ring and is configured to open or close the ventilation opening; and
an air pipe assembly, wherein the air pipe assembly and the exhaust fan both are located on a side of the exhaust valve that is sealingly connected to the first mounting ring and that faces away from the battery compartment, the air duct spans the exhaust valve and the air pipe assembly, the exhaust fan is mounted in the air pipe assembly, and an end of the air pipe assembly facing the first mounting ring is sealingly connected to the first mounting ring and/or the corresponding exhaust valve.

5. The energy storage system according to claim 4, wherein the exhaust valve comprises:
a valve body, wherein the first mounting ring is sealingly connected to the valve body of the corresponding exhaust valve, the air duct spans the valve body and the air pipe assembly, and the valve body has a valve port communicating with the air duct;
a valve plate, wherein the valve plate is movably mounted at the valve body to open or close the valve port, the valve plate is in a position closing the valve port to enable the exhaust valve to close the ventilation opening, the valve plate is in a position opening the valve port to enable the exhaust valve to open the ventilation opening, and when the valve plate closes the valve port, the valve plate and the valve body are sealed against each other; and
a normally closed apparatus, mounted at the valve body, wherein the normally closed apparatus is configured to keep the valve plate in the position closing the valve port under a normal condition.

6. The energy storage system according to claim 5, wherein the exhaust valve further comprises a breathable mesh plate connected to the valve body, the breathable mesh plate has a mesh portion allowing air to pass, and the mesh portion is located on a side of the valve plate facing the ventilation opening.

7. The energy storage system according to claim 5 or 6, wherein the partition wall and the valve plate are both provided with a thermal insulation layer.

8. The energy storage system according to any one of claims 4 to 7, wherein the air pipe assembly comprises:
an exhaust air pipe, located in the auxiliary compartment, wherein an end of the exhaust air pipe facing the first mounting ring is sealingly connected to the first mounting ring and/or the corresponding exhaust valve; and
a second mounting ring, located at an end of the exhaust air pipe facing away from the first mounting ring, wherein the second mounting ring is connected to a compartment wall of the auxiliary compartment, the second mounting ring and the exhaust air pipe are sealingly connected to each other, the air duct spans the second mounting ring, the exhaust air pipe, and the exhaust valve, and the second mounting ring surrounds the exhaust fan.

9. The energy storage system according to claim 8, wherein the energy storage box comprises a box body and a compartment door mounted on the box body, wherein:
the box body and the compartment door enclose the auxiliary compartment;
the second mounting ring is connected to the compartment door;
the air pipe assembly further comprises a buffer pad located between the exhaust air pipe and the second mounting ring;
the air duct spans the second mounting ring, the exhaust air pipe, the buffer pad, and the exhaust valve; and
one of the second mounting ring and the exhaust air pipe is connected to the buffer pad, the other of the second mounting ring and the exhaust air pipe is able to abut against or separate from the buffer pad, and when the compartment door is closed, the buffer pad implements sealing between the second mounting ring and the exhaust air pipe.

10. The energy storage system according to claim 8 or 9, wherein at least two exhaust valves are provided, at least one of the exhaust valves is located on a side of the exhaust fan facing away from the exhaust air pipe, and the second mounting ring is sealingly connected to the corresponding exhaust valve.

11. The energy storage system according to any one of claims 2 to 10, wherein the compartment wall of the auxiliary compartment comprises a mounting wall opposite the partition wall, an end of the switching assembly facing away from the ventilation opening is mounted on the mounting wall, and a gas in the battery compartment is discharged through the ventilation opening, the air duct, and the mounting wall.

12. The energy storage system according to any one of claims 1 to 11, further comprising a cooling unit configured to cool the battery cluster, wherein the cooling unit is located on a side of the auxiliary compartment along a width direction of the energy storage box, and the switching assembly is located on another side of the auxiliary compartment along the width direction of the energy storage box.

13. The energy storage system according to claim 12, further comprising a fire control pipe configured to supply firefighting water to the battery compartment, wherein the fire control pipe is located on a side of the auxiliary compartment along the width direction of the energy storage box facing away from the cooling unit.

14. The energy storage system according to any one of claims 1 to 13, wherein the compartment wall of the battery compartment is formed with an air inlet, and the energy storage system further comprises an air intake valve covering the air inlet, wherein the air intake valve is configured to open or close the air inlet, and when the air intake valve is open, the battery compartment communicates with the exterior of the energy storage box through the air inlet.

15. The energy storage system according to claim 14, wherein positions of the ventilation opening and the air inlet satisfy at least one of the following position arrangements:
the ventilation opening is located at an end of the battery compartment in a length direction, and the air inlet is located at another end of the battery compartment in the length direction;
the ventilation opening is located above the air inlet; and
the ventilation opening is located on a side of the battery compartment in a width direction, and the air inlet is located on another side of the battery compartment in the width direction.

16. The energy storage system according to any one of claims 1 to 15, further comprising a main control box configured to monitor the battery cluster, wherein the main control box is located in the battery compartment.
